# EUROPÄISCHE PATENTANMELDUNG

(11) **EP 3 462 463 A1**
(43) Veröffentlichungstag der Anmeldung: **03.04.2019**
(21) Anmeldenummer: 17193641.2
(22) Anmeldetag: 28.09.2017
(51) Int. Cl.: H01B 3/00, H01B 1/20

(54) **ISOLATIONSSYSTEM, ISOLATIONSSTOFF UND ISOLATIONSMATERIAL ZUR HERSTELLUNG DES ISOLATIONSSYSTEMS**

(71) Anmelder: Siemens Aktiengesellschaft, 80333 München (DE)
(72) Erfinder: Lang, Steffen, 91352 Hallerndorf (DE); Müller, Niels, 90425 Nürnberg (DE); Plochmann, Bastian, 91413 Neustadt an der Aisch (DE)

(57) **Zusammenfassung**

Die Erfindung betrifft ein Isolationssystem für eine elektrische Maschine, insbesondere eine rotierende elektrische Maschine des Hochspannungs- oder Mittelspannungsbereichs wie beispielsweise ein Generator, Transformator, eine Durchführung und/oder ein Kabel, die höheren Bemessungsspannungen bei Betriebsspannungen, also beispielsweise ab 10 kV oder mehr ausgesetzt sind. Das Isolationssystem umfasst einen Außenglimmschutz aus einem Isolationsstoff, der seinerseits durch Härtung aus einem Isolationsmaterial herstellbar ist. In dem Isolationsmaterial sind in einer polymeren Matrix eingebettete Füllstoffpartikel, die grundsätzlich n-dotierte Metalloxide sind, die zum einen im Verbundwerkstoff, überperkulär einen Quadratwiderstand von 1 bis 1000 k Ohm haben und zum andere gleichzeitig durch lokale elektrische Entladungen an den Fehlstellen, lokal den AGS-Widerstand unter sauerstoffhaltiger Atmosphäre um bis zu 7 Dekaden ansteigen lassen und damit lokal eine resistive Feldsteuerung erzeugen.

## Beschreibung

Die Erfindung betrifft ein Isolationssystem für eine elektrische Maschine, insbesondere eine rotierende elektrische Maschine des Hochspannungs- oder Mittelspannungsbereichs wie beispielsweise ein Generator, Transformator, eine Durchführung und/oder ein Kabel, die höheren Bemessungsspannungen bei Betriebsspannungen, also beispielsweise ab 10 kV oder mehr ausgesetzt sind. Das Isolationssystem umfasst einen Isolationsstoff, der seinerseits durch Härtung aus einem Isolationsmaterial herstellbar ist.

Es werden immer leistungsstärkere Maschinen, wie beispielsweise Generatoren, entwickelt, da die fortschreitende Technik immer höhere Leistungsdichten verlangt. Ein leistungsstarker Generator, wie beispielsweise ein Turbogenerator, weist insbesondere einen Ständer oder Stator mit einem Ständerblechpaket und einer Mehrzahl an Generatornuten, in denen sich das Generator-Isolationssystem, beispielsweise in Form einer Wicklung, befindet.

Die Hauptisolierung dieser Wicklung gegen das Blechpaket ist ein elektrisch hoch beanspruchtes System. Im Betrieb entstehen hohe Spannungen, welche in dem Isoliervolumen zwischen dem auf Hochspannung befindlichen Leiterstab und dem auf Erdpotential liegendem Blechpaket abgebaut werden müssen. An den Kanten der Bleche im Blechpaket entstehen dabei Feldüberhöhungen, die ihrerseits Teilentladungen hervorrufen. Diese Teilentladungen führen bei Auftreffen auf das Isolationssystem lokal zu sehr starken Erhitzungen. Dabei werden die organischen Materialien des Isolationssystems sukzessive in niedermolekulare, volatile Produkte, beispielsweise in CO₂ zersetzt.

Ein wichtiger Bestandteil des Isolationssystems ist der so genannte Außenglimmschutz, kurz AGS. Er wird bei größeren elektrischen Maschinen auf die Oberfläche der Wicklungsisolation appliziert. Der AGS besteht aktuell aus Ruß- und Graphit-haltigen Glimmschutzpapieren, die mit einem Tränkharz imprägniert sind.

Da systembedingt vor allem die Grenzfläche zwischen AGS und Hauptisolation nicht vollständig porenfrei hergestellt werden kann, kommt es bei entsprechend hohen elektrischen Feldstärken im Isolationssystem zu einer entsprechend hohen elektrischen Teilentladungsaktivität, die den Außenglimmschutz im Betrieb und im Laufe der Zeit komplett verbrennt und somit zu einer vorzeitigen Alterung des Isolationssystems und im schlimmsten Fall zu einem Erdschluss der elektrischen Maschine führt. Das entspricht einem irreparablen Komplettausfall der Maschine.

Ein Außenglimmschutz stellt hierbei eine leitfähige Schicht dar, welche als elektrisch leitfähige Sollbruchstelle zwischen Hauptisolation und Blechpaket im Aktivteil des Generators funktioniert. Thermische Ausdehnung und mechanische Belastungen durch Vibration machen eine langzeitstabile Grenzschicht zwischen Isolationssystem und Blechpaket faktisch unmöglich. Daher wird als AGS eine Soll-Bruch-Schicht eingebracht, welche flächig den elektrischen Kontakt sicherstellt. Dabei sind die Bleche des Blechpakets gerade soweit kurzzuschließen, dass keine nennenswerten Feldüberhöhungen zu Teilentladungen führen. Zudem unterschreitet der AGS nicht einen gewissen Mindestwiderstand, um Kreisströme zwischen den sonst elektrisch isolierten Blechen zu verhindern.

Eine komplette Verhinderung von Teilentladungen ist praktisch nicht möglich, da fertigungsbedingt oder durch mechanische und/oder thermische Belastungen sich im Betrieb Fehlstellen - beispielsweise in Form von Spalten und Poren - zwischen AGS und Blechpaket ergeben in denen während des Betriebs Teilentladungen zünden.

Nach dem Stand der Technik, wie er beispielsweise aus der EP 3078033 bekannt ist, liegt im Isolationssystem in der AGS Schicht ein Verbundwerkstoff aus Kohlenstoffpartikel in planarer und/oder globularer Form mit oder ohne Verstärkungsfasern in einer Kunststoffmatrix vor, wobei die Füllstoffkonzentration die Perkolationsschwelle überschreitet und somit im Isolationssystem ein elektrisch teilleitfähiger Isolationsstoff vorliegt.

Nachteilig an dem bekannten Stand der Technik ist jedoch, dass bei den vorherrschenden starken elektrischen Belastungen, die meist unter Sauerstoff-Atmosphäre, also beispielsweise einfach nicht unter Schutzgas sondern an Luft, in Form von elektrischen Teilentladungen und/oder Glühbelastungen auf das Isolationssystem wirken, der Ruß oder Graphit vom Sauerstoff, insbesondere bei den herrschenden energetischen Bedingungen, korrodiert und zersetzt wird - beispielsweise durch Umwandlung in CO₂ - und damit die Teilleitfähigkeit des Isolationsstoffes auch zerstört wird.

Aufgabe der vorliegenden Erfindung ist es daher, die Nachteile des Standes der Technik zu überwinden, insbesondere Füllstoffe zur Verfügung zu stellen, die unter den genannten Bedingungen gegenüber einer Degradierung durch Sauerstoff im Betrieb, also bei Teilentladungen, resistenter sind als die bekannten, mit beschichteten Kohlenstoffpartikel gefüllten, Isolationsstoffe für Isolationssysteme.

Die Lösung der Aufgabe und der Gegenstand der vorliegenden Erfindung sind in der hier vorliegenden Beschreibung, den Figuren und den Ansprüchen offenbart.

Dementsprechend ist Gegenstand der vorliegenden Erfindung ein Isolationsmaterial für eine elektrische rotierende Maschine, ein härtbares Matrixmaterial und einen Härter mit darin eingebettetem Füllstoff umfassend, wobei der Füllstoff zumindest eine Partikel-Fraktion aus Metalloxid-Partikel hat, die durch Dotierung leitfähig sind. Außerdem ist Gegenstand der Erfindung ein Isolierstoff, der durch Härtung des Isoliermaterials herstellbar ist. Schließlich ist noch ein Isolationssystem Gegenstand der Erfindung, das einen Isolierstoff nach der Erfindung enthält.

Nach einer vorteilhaften Ausführungsform der Erfindung liegt im Isoliermaterial die zumindest eine Füllstofffraktion mit den metalloxidischen Partikel, die durch Dotierung elektrisch leitfähig sind, in einer Konzentration vor, die die Perkolationsschwelle überschreitet.

Nach einer vorteilhaften Ausführungsform der Erfindung liegt im Isolationssystem als Außenglimmschutz, Endenglimmschutz und/oder als innere Potentialsteuerung eine Schicht aus einem Isolierstoff vor, der durch das Isolationsmaterial mit dem härtbaren Matrixmaterial, dem Härter und der mindestens einen Füllstofffraktion, durch Härtung herstellbar ist.

Nach einer Ausführungsform der Erfindung liegt ein Isolationssystem vor, das einen Isolierstoff, der durch Härtung eines Isoliermaterials nach der Erfindung erhältlich ist, umfasst, das als Außenglimmschutz AGS, Endenglimmschutz EGS und/oder als innere Potentialsteuerung eine Schicht mit einem Widerstand im Kilo-Ohm- bis Mega-Ohm-Bereich als Quadratwiderstand einer derartigen Schicht mit mehreren 100µm Dicke, hat.

Nach einer vorteilhaften Ausführungsform der Erfindung liegt im Isolationssystem als Außenglimmschutz und/oder als innere Potentialsteuerung eine Schicht aus einem Isolierstoff, der durch das Isolationsmaterial mit der härtbaren Matrix, dem Härter und der mindestens einen Füllstofffraktion durch Härtung herstellbar ist, vor, die bei einer Schichtdicke von ca. 100 bis 400 µm einen Quadratwiderstand von 1 bis 100 kOhm hat.

Nach einer bevorzugten Ausführungsform umfasst das Isolationssystem eine Hauptisolation, eine innere Potentialsteuerung, IPS, einen Außenglimmschutz, AGS, und einen Endenglimmschutz, EGS, wobei durch die Einstellung der Füllstofffraktion(en) in der polymeren Matrix des Isolierstoffes ein elektrischer Widerstand in einer Bandbreite von 10⁴ Ohm bis 10¹² einstellbar ist. Die Einstellung des Widerstands ist durch die Wahl des Metalloxids, die Dotierung des Metalloxids, sowohl vom Dotierungs-Element als auch von der Konzentration her, sowie durch die Schichtdicke des Isolationsstoffes, sowie durch beliebige Kombinationen der vorgenannten Variationsmöglichkeiten einstellbar.

Nach einer Ausführungsform umfasst das Isolationssystem den Isolierstoff und ein Isolierband, beispielsweise in Form eines Wickelbandes.

Nach einer vorteilhaften Ausführungsform der Erfindung hat die zumindest eine Partikel-Fraktion aus dotiertem Metalloxid ein Aspektverhältnis von 10 oder höher, so dass sie plättchenförmig vorliegt.

Nach einer vorteilhaften Ausführungsform der Erfindung weist das Isolationsmaterial mehrere Partikel-Fraktionen auf, die in dem härtbaren Matrixmaterial eingebettet sind.

Dabei ist eine weitere vorteilhafte Ausführungsform die, dass mehrere Partikelfraktionen mit unterschiedlichen Formen vorliegen.

Nach einer weiteren Ausführungsform der Erfindung liegt zumindest eine Partikel-Fraktion mit plättchenförmigen Partikeln vor.

Nach einer weiteren Ausführungsform der Erfindung liegt zumindest eine Partikelfraktion mit globularen Partikeln vor.

Nach einer weiteren Ausführungsform liegt zumindest eine Partikelfraktion mit stäbchenförmigen Partikeln vor.

Nach einer weiteren Ausführungsform liegt zumindest eine Partikelfraktion in Form kurzer Fasern vor.

Nach einer weiteren Ausführungsform liegen zumindest zwei Partikelfraktionen eine mit plättchenförmigen Partikel und eine mit globularen Partikel vor.

Nach einer weiteren Ausführungsform der Erfindung liegen zumindest zwei Partikelfraktionen der gleichen Form vor.

Nach einer weiteren Ausführungsform der Erfindung liegen zumindest zwei Partikelfraktionen unterschiedlicher Dimensionen vor.

Nach einer weiteren Ausführungsform liegt zumindest eine Partikelfraktion, die Partikel mit zumindest einer nanoskaligen Dimension hat, vor.

Nach einer weiteren Ausführungsform liegt zumindest eine Partikelfraktion, die Partikel mit zumindest einer mikroskaligen Dimension hat, vor.

Nach einer weiteren vorteilhaften Ausführungsform der Erfindung weisen die Partikel eine n-Dotierung auf.

Nach einer weiteren vorteilhaften Ausführungsform der Erfindung sind die Partikel massiv.

Nach einer weiteren Ausführungsform der Erfindung sind die Partikel porös.

Nach einer anderen Ausführungsform der Erfindung sind die Partikel hohl.

Nach einer weiteren Ausführungsform der Erfindung haben die plättchenförmigen Partikel eine nanoskalige und zwei mikroskalige Dimensionen.

Unter "Nanoskalig" wird vorliegend verstanden, dass zumindest eine Partikelfraktion eine Dimension im Nanometerbereich, beispielsweise unter 500nm, bevorzugt unter 300 nm und ganz bevorzugt unter 100 nm, hat.

Nach einer vorteilhaften Ausführungsform der Erfindung ist das metalloxidische Material, aus dem die Partikel der zumindest einen dotierten Füllstofffraktion sind, ausgewählt aus der Gruppe folgender Metalloxide, Gläser und Keramiken: Metalloxide in binärer und tertiärer Mischphase, insbesondere Zinnoxid, Zinkoxid, Zinkstannat, Titanoxid, Bleioxid, Siliziucarbid, Chromoxid, Aluminiumoxid, beliebige Gemische daraus und/oder weitere zur Dotierung geeignete Metall-oxide oder Metallmisch-oxide.

Zur Dotierung der oben genannten Metalloxide können beispielsweise folgende Elemente, sowie beliebige Mischungen dieser Elemente eingesetzt werden: Antimon, Fluor, Chlor, Wolfram, Molybdän, Eisen, Phosphor, Schwefel, Nickel, allein oder in beliebigen Kombinationen.

Die Konzentration der Dotierung liegt vorzugsweise im Bereich von 5 bis 30 Mol%, insbesondere von 10 bis 20 Mol%.

Für den Einsatz als Füllstoff im Außenglimmschutz können dadurch beispielsweise kleine Quadratwiderstände im Bereich von 10³ bis 10⁵, insbesondere im Bereich von 10⁴ Ohm realisiert werden.

Geeignet als Material für die Füllstoffpartikel sind sämtliche n-leitenden Halbleiter, die als Partikel herstellbar sind, in Form eines Verbund-Isolierstoffes in eine härtbare Matrix eingebettet und dann in dünnen Schichten verarbeitet werden können.

Beispielsweise können die n-leitenden Füllstoffpartikel auch beschichtet vorliegen.

Insbesondere sollen die Füllstoffpartikel unter oxidierender Atmosphäre eine nennenswerte oberflächliche Verarmungsrandschicht bilden, und die durch Dotierung einen sinnvollen Widerstandsbereich eines AGS, also beispielsweise im Bereich von 10² bis 10⁷ Ohm, erreichen.

Allgemeine Erkenntnis der Erfindung ist es, dass sich metalloxidische Füllstoffpartikel, wenn sie entsprechend hergestellt und n-leitend dotiert sind, durch die Ausprägung an Verarmungsrandschichten mit Sauerstoffleerstellen als Elektronendonatoren eignen. Im Falle von Teilentladungen weiten sich diese Verarmungsrandschichten bis in untere Schichten aus und erzeugen damit lokal einen hochohmigen Bereich, in dem die Teilentladungen einfach über das Potential abgebaut werden. So nimmt der elektrische Widerstand des perkolierten Partikel-Netzwerkes mit den Sauerstoffleerstellen in dem Isolierstoff in einem Maße zu, dass die Eigenschaften eines Endenglimmschutzes lokal vorliegen und somit das elektrische Feld, welches eine Teilentladung zünden lässt, resistiv gesteuert wird. So passivieren sich vorhandene Fehlstellen in der Schicht von selbst. Herkömmliche AGS-Schichten mit Kohlenstoff-Partikel in Isolierstoffen werden bei gleicher Belastung komplett zerstört.

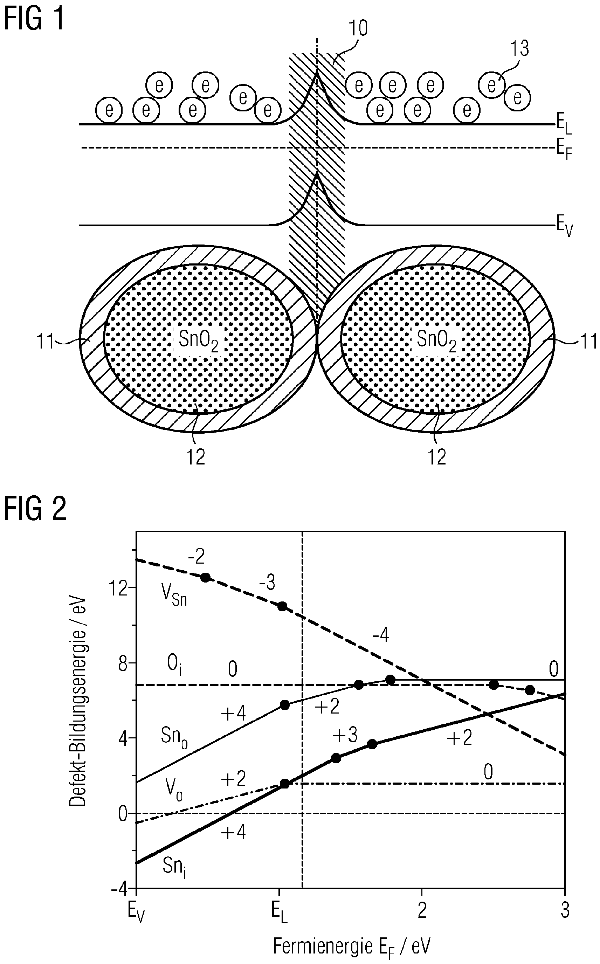

Die Oberflächenrandschicht eines Metalloxids, wie am Beispiel Zinnoxid in den Figuren 1 und 2 erläutert wird, bildet unter oxidierender Atmosphäre bei hoher Temperatur Sauerstoffleerstellen, die als Elektronendonatoren wirken und hier bevorzugt eingesetzt werden. Es ergibt sich damit im Betrieb eines damit hergestellten AGS lokal ein Widerstandsgefüge, das - vergleichbar mit dem Prinzip des Endenglimmschutzes - eine resistive Steuerung des elektrischen Feldes bewirkt, wobei die lokale Feldstärke und somit die lokale TeilentladungsAktivität bei gleichbleibender Spannung mit der Zeit abnimmt. Somit baut sich quasi eine vorhandene Fehlstelle durch das vorliegende n-leitende Material selbstständig eine hochohmige resistiv steuernde Schicht auf - durch die von selbst oxidierenden Verarmungsrandschichten, welche dazu führt, dass die Teilentladungsaktivität in der Fehlstelle nachlässt oder gar verschwindet. Es entsteht also eine selbstregulierende Schicht.

Figur 1 zeigt dazu ein Schema von Zinnoxid-Partikeln mit hochohmigen Verarmungsrandschichten. Gezeigt ist eine Potentialbarriere 10 der Grenzfläche zwischen zwei Zinnoxid-Partikeln 12 an der sich Elektronen 13 aus den beiden Zinnoxidpartikel-Verarmungsrandschichten 11 gegenseitig abstoßen.

Figur 2 zeigt die Bildungsenergien von Defekten in Zinnoxid-Partikeln. Die Bildungsenergie von Sauerstoffleerstellen liegt bei Zinnoxid-Partikel wie zu sehen ist im Bereich +/- 0eV und somit können sich in diesem Material Sauerstoffleerstellen unter reduzierender Atmosphäre bilden und unter oxidierender Atmosphäre wieder verschwinden.

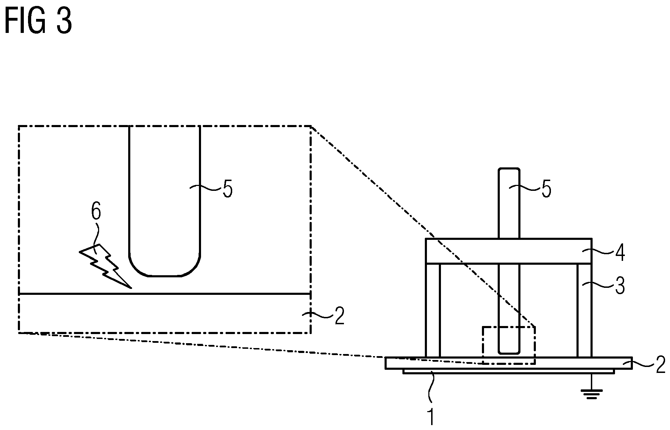

Figur 3 zeigt einen Messaufbau für Testzwecke. Getestet wurde die elektrische Auslagerung unter Teilentladungen, wie sie im Betrieb eines Isolationssystems mit Hauptisolierung, innen Potentialsteuerung Außenglimmschutz und Endenglimmschutz vorkommen. Getestet wurde ein Probekörper aus einem Isolierstoff, der als Außenglimmschutz einsetzbar ist. Zu erkennen ist die Plattenelektrode 1, auf der der Probekörper 2 liegt, dann die Stabelektrode 5, beispielsweise aus Edelstahl, eine Abdeckung 4 und eine ringförmige Auflage 3. Die Teilentladung wird durch den Pfeil 6 repräsentiert.

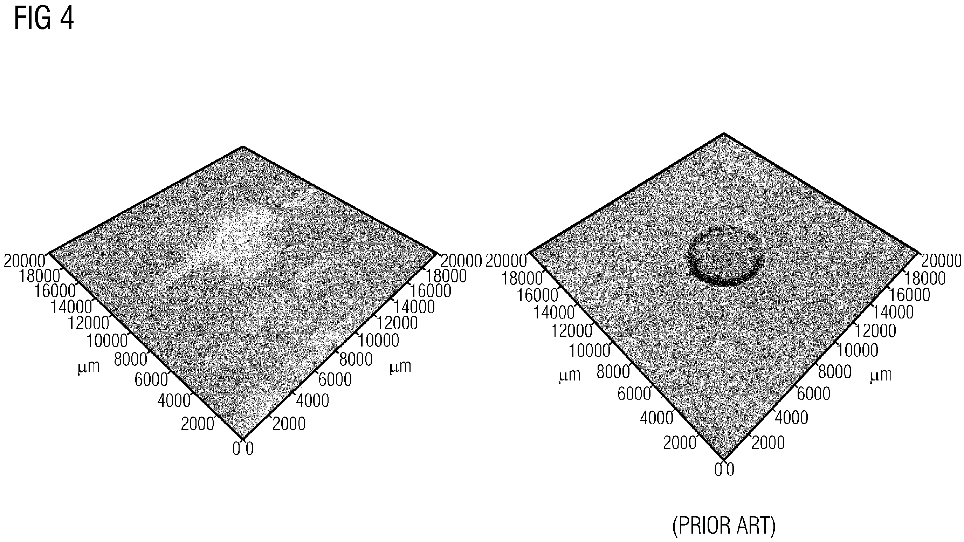

Figur 4 zeigt dann zwei Probekörper 2 aus Figur 3 im Vergleich,
- links nach erfolgtem Test ein Isolierstoff gemäß der vorliegenden Erfindung, eine bettende Matrix und darin zumindest eine Füllstoff-Partikelfraktion, die aus einem dotierten Metalloxid besteht nahezu unbeschädigt und
- rechts ein Vergleichs-Probekörper mit herkömmlichen Ruß/Graphit gefülltem Isolierstoff, der lokal komplett zerstört ist.

Zu erkennen ist, dass bei den Versuchen, bei denen Teilentladungen mit einer Stabelektrode auf Prüfbeschichtungen über mehrere Stunden hinweg gezündet wurden ein Isolierstoff, dessen elektrische Leitfähigkeit durch die erfindungsgemäßen dotierten Metalloxid-Partikel erzeugt wird, eine deutlich höhere Resistenz gegenüber Teilentladungen zeigt. So zeigt unter gleichen Teilentladungs-Auslagerungsbedingungen zu dem Zeitpunkt, an dem die mit Ruß/Graphit gefüllten herkömmlichen Isolierstoffe bereits ein komplettes Loch haben, also lokal vollständig "aufgefressen" sind, der Probekörper aus dem Isolierstoff, der erfindungsgemäß hergestellt wurde, nahezu keine Erosionsspuren.

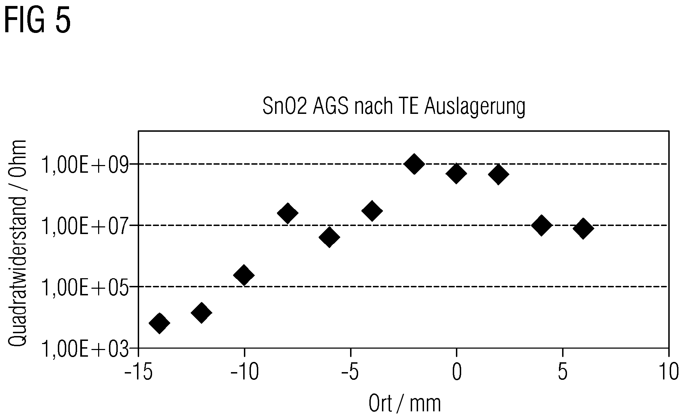

Im Falle einer zerstörten Stelle im Isolationssystem eines Generators, wie rechts in Figur 4 gezeigt, würde sich also ein herkömmlicher Außenglimmschutz sukzessive auflösen und die Störstelle zunehmend schneller wachsen, womit eine Beanspruchung und Zerstörung der Hauptisolation durch zunehmende Feldstärken und damit Teilentladungsaktivitäten einherginge. Der linke Probekörper mit der Vergleichsschicht gemäß der vorliegenden Erfindung, in dem Beispiel ein mit dotiertem Zinnoxid gefüllter Isolierstoff, hingegen zeigt zusätzlich zur Erosionsresistenz ein deutlich erhöhtes Widerstandsprofil, wie in Figur 5 zu sehen ist.

Figur 5 zeigt die Messung des Widerstands über den mit Teilentladungen beanspruchten Bereich des linken Probekörpers aus Figur 4 und es wurde erwartungsgemäß eine Widerstandsverschiebung vom "normalen" AGS-Widerstandsbereich, der bei ca. 10⁴ Ohm liegt, hin zum Widerstandsbereich des EGS, der bei ca. 10 ⁹ Ohm liegt, beobachtet. Dieser Effekt ist auf die oberflächenrandschichten, vergleiche dazu Figur 1, und deren Oxidation durch die lokale Energie der Teilentladungen und das Vorhandensein von oxidierender Atmosphäre, wie in Figur 2 gezeigt, zurückzuführen. Es ergibt sich damit beim linken Probekörper lokal ein EGS-Widerstandsgefüge, wodurch das elektrische Feld resistiv gesteuert wird und somit die lokale Feldstärke und somit die lokale Teilentladungsaktivität bei gleichbleibender Spannung mit der Zeit abnimmt. Somit "baut" sich quasi eine vorhandene Fehlstelle durch das vorliegende n-leitende Material durch die von selbst oxidierenden Verarmungsrandschichten selbstständig eine hochohmige, resistiv steuernde Schicht auf, welche dazu führt, dass die Teilentladungsaktivität in der Fehlstelle nachlässt oder gar verschwindet. Es entsteht also ein selbstregulierender Isolierstoff für einen Außenglimmschutz.

Figur 5 zeigt die gemessene Widerstandsverschiebung über die Teilentladungs-beanspruchte Stelle Außenglimmschutz-Prüfschicht gemäß der vorliegenden Erfindung mit dotierten Zinnoxid-Partikeln als Füllstofffraktion im Isolierstoff.

Hier wird erstmals ein Isoliermaterial für ein Isolationssystem vorgestellt, in dem in einer polymeren Matrix eingebettete Füllstoffpartikel für den AGS verwendet werden, die grundsätzlich n-dotierte Metalloxide sind, die zum einen im Verbundwerkstoff, überperkulär einen Quadratwiderstand von 1 bis 1000 k Ohm haben und zum andere gleichzeitig durch lokale elektrische Entladungen an den Fehlstellen, lokal den AGS-Widerstand unter sauerstoffhaltiger Atmosphäre um bis zu 7 Dekaden ansteigen lassen, so dass der lokal erhöhte Widerstandsbereich wie eine lokal resistiv-kapazitive Feldsteuerung - vergleichbar mit einem Endenglimmschutz EGS - fungiert. Durch die auftretende Belastung durch Teilentladungen verändern sich die elektrochemischen Eigenschaften der Partikel dahingehend, dass sie sich selbstständig zu einer EGS-Schicht entwickeln. Deshalb kann vorliegend von einem "selbstheilendem" oder sich selbst "passivierendem" System gesprochen werden, was die Lebensdauer der Isolationssysteme von elektrisch rotierenden Maschinen deutlich erhöht.

## Patentansprüche

1. Isolationsmaterial für eine elektrische rotierende Maschine, ein härtbares Matrixmaterial mit einem Härter und einen darin eingebetteten Füllstoff umfassend, wobei im Füllstoff zumindest eine Partikel-Fraktion aus Metalloxid-Partikeln vorliegt, die durch Dotierung elektrisch leitfähig sind.

2. Isolationsmaterial nach Anspruch 1, wobei die zumindest eine Partikel-Fraktion in einer Konzentration vorliegt, die die Perkolationsschwelle überschreitet.

3. Isolationsmaterial nach einem der Ansprüche 1 oder 2, wobei die zumindest eine Partikel-Fraktion aus dotiertem Metalloxid ein Aspektverhältnis von 10 oder höher hat.

4. Isolationsmaterial nach einem der vorhergehenden Ansprüche, wobei mehrere Partikel-Fraktionen vorliegen, die elektrisch leitfähig, aus dotiertem Metalloxid und in dem härtbaren Matrixmaterial eingebettet sind.

5. Isolationsmaterial nach einem der vorhergehenden Ansprüche, wobei mehrere Partikel-Fraktionen mit unterschiedlichen Formen vorliegen.

6. Isolationsmaterial nach einem der vorhergehenden Ansprüche, wobei die zumindest eine Partikel-Fraktion in Form von Kugeln, also mit globularen Partikel vorliegt.

7. Isolationsmaterial nach einem der vorhergehenden Ansprüche, wobei zumindest zwei Partikel-Fraktionen unterschiedlicher Dimensionen vorliegen.

8. Isolationsmaterial nach einem der vorhergehenden Ansprüche, wobei zumindest eine Partikel-Fraktion, die Partikel mit zumindest einer nanoskaligen Dimension hat, vorliegt.

9. Isolationsmaterial nach einem der vorhergehenden Ansprüche, wobei zumindest eine Partikel-Fraktion, die Partikel mit zumindest einer mikroskaligen Dimension hat, vorliegt.

10. Isolationsmaterial nach einem der vorhergehenden Ansprüche, wobei die leitfähigen Partikel aus Metalloxid eine n-Dotierung aufweisen.

11. Isolationsmaterial nach einem der vorhergehenden Ansprüche, wobei die leitfähigen Partikel aus Metalloxid massiv sind.

12. Isolationsmaterial nach einem der vorhergehenden Ansprüche, wobei das Metalloxid ausgewählt ist aus der Gruppe folgender Metalloxide: Metalloxide in binärer und tertiärer Mischphase, insbesondere Zinnoxid, Zinkoxid, Zinkstannat, Titanoxid, Bleioxid, Siliziumcarbid, Chromoxid, Aluminiumoxid, beliebige Gemische daraus und/oder weitere zur Dotierung geeignete Metall-oxide oder Metallmisch-oxide.

13. Isolationsmaterial nach einem der vorhergehenden Ansprüche, wobei das Dotierungselement ausgewählt ist aus der Gruppe folgender Elemente: Antimon, Fluor, Chlor, Wolfram, Molybdän, Eisen, Phosphor, Schwefel, Nickel, allein oder in beliebigen Kombinationen.

14. Isolationsstoff, erhältlich durch Härtung eines Isolationsmaterials nach einem der Ansprüche 1 bis 13.

15. Isolationssystem, eine Hauptisolierung, einen Außenglimmschutz und einen Endenglimmschutz umfassend, wobei der Außenglimmschutz einen Isolationsstoff nach Anspruch 14 hat.
